# EUROPÄISCHE PATENTSCHRIFT

(11) **EP 1 923 720 B1**
(45) Veröffentlichungstag und Bekanntmachung des Hinweises auf die Patenterteilung: **08.01.2014**
(21) Anmeldenummer: 07020465.6
(22) Anmeldetag: 19.10.2007
(51) Int. Cl.: G01S 17/02, G01S 7/481

(54) **Detektionsvorrichtung mit mehrteiligem Gehäuse**
Detection device with multi-part casing
Dispositif de détection doté d'un boîtier en plusieurs parties

(30) Priorität: 14.11.2006 DE 102006053468
(43) Veröffentlichungstag der Anmeldung: 21.05.2008
(73) Patentinhaber: Rheinmetall Defence Electronics GmbH, 28309 Bremen (DE)
(72) Erfinder: Hartmann, Martin, 28857 Syke (DE)
(74) Vertreter: Greif, Thomas

(56) Entgegenhaltungen:
- CH-A5- 680 471
- DE-A1- 3 150 642
- US-B1- 6 433 866

## Beschreibung

Die vorliegende Erfindung betrifft eine Detektlonsvorrichtung mit einem Gehäuse bestehend aus einem Basisteil sowie mindestens zwei unabhängig voneinander um die gleiche Achse gegen das Basisteil verdrehbaren weiteren Gehäuseteilen.

Die Offenlegungsschrift DE 3150642 A1 offenbart eine Einrichtung zur optischen Nachrichtenverblndung, bei der drei Teile eines Gehäuses um eine lotrechte Achse gegeneinander verdrehbar sind. Die Verdrehung erfolgt mittels zweier Elektromotoren.

Die Anmelderin vertreibt eine Detektionsvorrichtung, die ein Gehäuse aus einem Basisteil und einem gegen das Basisteil verdrehbaren weiteren Gehäuseteil aufweist. Im Betrieb wird das weitere Gehäuseteil in eine konstante Rotation versetzt, wodurch sich als Detektionsbereich ein Panorama In Form einer 360°-Rundumsicht ergibt.

Es ist die Aufgabe der vorliegenden Erfindung, die bestehende Detektionsvorrichtung derart um eine weitere, unabhängige Sensoreinheit zu erweitern, dass damit die gesamte Hemisphäre oberhalb der Detektionsvorrichtung erfassbar ist. Die weitere Sensoreinheit soll insbesondere eine Verifizierung von Objekten oder das beobachten von Sektoren der Hemisphäre ermöglichen.

Gelöst wird diese Aufgabe durch die Merkmalskombinationen der unabhängigen Patentansprüche 1 und 5. Weitere vorteilhafte Ausgestaltungsformen sind In den abhängigen Patentansprüchen angegeben.

Eine erfindungsgemäße Detektionsvorrichtung weist ein Gehäuse auf, bestehend aus einem Basisteil sowie mindestens zwei unabhängig voneinander um die gleiche Achse gegen das Basisteil verdrehbaren weiteren Gehäuseteilen. Dabei ist ein erstes weiteres Gehäuseteil frei drehbar auf dem Basisteil gelagert und ein zweites weiteres Gehäuseteil frei drehbar an dem ersten weiteren Gehäuseteil angeordnet. Die Detektionsvorrichtung weist ferner eine das Gehäuse umkreisende Synchronwelle auf, deren erstes Ende kraft- oder formschlüssig mit dem Umfang des Basisteils verbunden ist und deren zweites Ende kraft- oder formschlüssig mit dem zweiten weiteren Gehäuseteil verbunden ist derart, dass bei einer Drehung des ersten weiteren Gehäuseteils die relative Drehlage des zweiten weiteren Gehäuseteils zum Basisteil erhalten bleibt.

In einer alternativen Ausführungsform weist die Detektionsvorrichtung eine im Inneren des Gehäuses kreisende Synchronwelle auf, deren erstes Ende kraft- oder formschlüssig mit der Innenseite des Basisteils verbunden ist und deren zweites Ende kraft- oder formschlüssig mit dem zweiten weiteren Gehäuseteil verbunden ist derart, dass bei einer Drehung des ersten weiteren Gehäuseteils die relative Drehlage des zweiten weiteren Gehäuseteils zum Basisteil erhalten bleibt.

Dadurch, dass das erste weitere Gehäuseteil auf dem Basisteil und das zweite weitere Gehäuseteil auf dem ersten weiteren Gehäuseteil angeordnet ist, hat das erste weitere Gehäuseteil eine freie 360°-Rundumsicht und das zweite weitere Gehäuseteil uneingeschränkte Sicht in der Hemisphäre oberhalb sowie gegebenfalls zumindest teilweise in eine Region unterhalb des zweiten Gehäuseteils der Detektionsvorrichtung. Die beiden weiteren Gehäuseteile sind insofern mechanisch entkoppelt, als dass eine Detektionseinrichtung im zweiten weiteren Gehäuseteil beliebig ausrichtbar ist, ohne dass die bei der Ausrichtung auftretenden Kräfte und Momente einen Einfluss auf die Ausrichtung beziehungsweise Bewegung des ersten weiteren Gehäuseteils haben.

Um eine zuverlässige Detektion zu gewährleisten, muss das zweite weitere Gehäuseteil eine bekannte räumliche Ausrichtung aufweisen. Diese wird dadurch erreicht, dass das zweite weitere Gehäuseteil eine konstante relative Drehlage zum Basisteil aufweist. Je nach Ausgestaltung des ersten weiteren Gehäuseteils ist es nicht möglich, die Fixierung des zweiten weiteren Gehäuseteils gegenüber dem Basisteil durch das erste weitere Gehäuseteil hindurch zu erreichen. Daher wird auf eine außerhalb des ersten weiteren Gehäuseteils angeordnete Synchronwelle zurückgegriffen, die in mechanischer Wirkverbindung sowohl mit dem Basisteil als auch mit dem zweiten weiteren Gehäuseteil steht.

Bei einer Drehung der Synchronwelle umkreist diese das Gehäuse beziehungsweise innerhalb des Gehäuses. Ist das Übersetzungsverhältnis der mechanischen Verbindung zwischen der Synchronwelle und dem Basisteil gleich der Übersetzung der mechanischen Verbindung zwischen der Synchronwelle und dem zweiten weiteren Gehäuseteil, so bleibt die relative Drehlage des zweiten weiteren Gehäuseteils gegenüber dem Basisteil erhalten. Der Vorteil der kreisenden Synchronwelle ist, dass eine ortsfest angeordnete Verbindung zwischen Basisteil und zweitem weiteren Gehäuseteil den Erfassungsbereich einer Empfangseinrichtung im ersten weiteren Gehäuseteil bei jeder Umdrehung beeinträchtigen würde.

Bevorzugt weist das erste weitere Gehäuseteil eine räumlich begrenzte Öffnung für die zu detektierenden Signale auf. Kreist die Synchronwelle derart um oder in dem Gehäuse, dass die Synchronwelle die Öffnung des ersten weiteren Gehäuseteils nie verdeckt, so ergibt sich keine Beeinträchtigung des Erfassungsbereichs. Bevorzugt ist die Synchronwelle angetrieben, beispielsweise mittels eines steuerbaren Antriebs, insbesondere eines Schrittmotors. Weiterhin bevorzugt kreist die Synchronwelle im Wesentlichen synchron mit dem ersten weiteren Gehäuseteil. Das bedeutet, dass die Synchronwelle im Wesentlichen mit der Winkelgeschwindigkeit, mit der sich das erste weitere Gehäuseteil dreht, das Gehäuse umkreist oder im Gehäuse kreist. Dabei sind kurzzeitige Abweichungen in den beiden Winkelgeschwindigkeiten möglich, so lange die Synchronwelle die räumlich begrenzte Öffnung im ersten weiteren Gehäuseteil nicht verdeckt.

In einer Ausgestaltungsform der Erfindung ist die das Gehäuse umkreisende Synchronwelle in einer Halteklammer gelagert. Die Halteklammer umgreift beispielsweise beide Enden der Synchronwelle sowie den Umfang des Basisteils, wobei die Halteklammer um das Basisteil drehbar gelagert ist. Durch die Halteklammer wird ein konstanter definierter Abstand der Synchronwelle zum Gehäuse und somit eine dauerhafte mechanische Wirkverbindung zwischen der Welle und dem Basisteil beziehungsweise dem zweiten weiteren Gehäuseteil sichergestellt.

Bevorzugt verläuft die Drehachse der Synchronwelle parallel zu der Drehachse der weiteren Gehäuseteile. Dies ermöglicht einen einfachen mechanischen Aufbau der Synchronwelle sowie der mechanischen Verbindung zwischen der Synchronwelle und dem Basisteil beziehungsweise dem zweiten weiteren Gehäuseteil.

Die kraft- oder formschlüssige Verbindung zwischen der Synchronwelle und dem Basisteil beziehungsweise dem zweiten weiteren Gehäuseteil besteht beispielsweise aus einer Reibverbindung, einer Verbindung mit einem Keilriemen oder einer Verzahnung.

In einer Ausgestaltungsform der Erfindung ist im ersten weiteren Gehäuseteil ein Sensor, insbesondere eine Empfangseinrichtung für Infrarotsignale, angeordnet. Die Empfangseinrichtung besteht beispielsweise aus einem Infrarotsensor oder einem Spiegel, der die Infrarotsignale auf einen Sensor umlenkt.

In einer weiteren Ausführungsform der Erfindung besteht das zweite weitere Gehäuseteil aus einem Trägerteil und einem gegenüber dem Trägerteil verdrehbaren und/oder zumindest teilweise schwenkbarem Kopfteil. Dabei bleibt die relative Drehlage des Trägerteils des zweiten weiteren Gehäuseteils zum Basisteil über die Synchronwelle erhalten, während das Kopfteil gegenüber dem Basisteil verdrehbar und/oder zumindest teilweise schwenkbar ist. Somit ist eine optional im zweiten weiteren Gehäuseteil angeordnete Sensoreinheit beliebig auf einen Bereich in der Hemisphäre oberhalb der Detektionsvorrichtung ausrichtbar.

Die optional im zweiten weiteren Gehäuseteil angeordnete Sensoreinrichtung ist beispielsweise eine Messvorrichtung wie zum Beispiel ein Laserentfernungsmesser oder ein bildgebender Sensor wie beispielsweise ein Infrarotsensor.

In einer Ausgestaltungsform der Erfindung ist im Basisteil des Gehäuses eine Auswerteelektronik angeordnet. Sind in den weiteren Gehäuseteilen ausschließlich Sensoren beziehungsweise Empfangeinrichtungen angeordnet, während sich die Auswerteelektronik im Basisteil des Gehäuses befindet, so ist eine Ausrichtung beziehungsweise Drehung der weiteren Gehäuseteile aufgrund der geringeren Masse schneller und genauer möglich.

In einer Ausgestaltungsform der Erfindung sind zwischen dem Basisteil und dem ersten weiteren Gehäuseteil Drehübertrager angeordnet. Über diese Drehübertrager findet beispielsweise ein Datenaustausch oder die Energieversorgung statt. Weiterhin bevorzugt ist zumindest ein Drehübertrager zwischen dem ersten weiteren Gehäuseteil und dem zweiten weiteren Gehäuseteil angeordnet. Die Drehübertrager können beispielsweise als Schleifkontakt ausgebildet sein.

In einer Ausgestaltung der Erfindung sind Drehübertrager zwischen dem Basisteil und der Halteklammer vorgesehen. Dadurch wird beispielsweise der Antrieb der Synchronwelle mit Energie versorgt oder Informationen, beispielsweise über die Position der Synchronwelle, übertragen. Alternativ oder zusätzlich ist ein Kabel zwischen dem ersten weiteren Gehäuseteil und der Halteklammer angeordnet. Dadurch, dass erfindungsgemäss nur eine geringe maximale Relativbewegung zwischen dem ersten weiteren Gehäuseteil und der Halteklammer möglich ist, ist die Verwendung einer flexiblen Verkabelung möglich.

Bevorzugt ist am Basisteil eine Befestigungsvorrichtung angeordnet. Mittels dieser Befestigungsvorrichtung ist die Detektionsvorrichtung beispielsweise auf dem Boden aufstellbar oder auf einem Fahrzeug montierbar.

Die Erfindung soll anhand eines Ausführungsbeispiels näher erläutert werden. Dabei zeigen
- Figur 1: eine Seitenansicht einer erfindungsgemäßen Detektionsvorrichtung,
- Figur 2: einen Längsschnitt durch die Detektionsvorrichtung aus Figur 1 und
- Figur 3: einen Schnitt durch die Detektionsvorrichtung 1 aus Figur 2 entlang der Schnittlinie A-A.

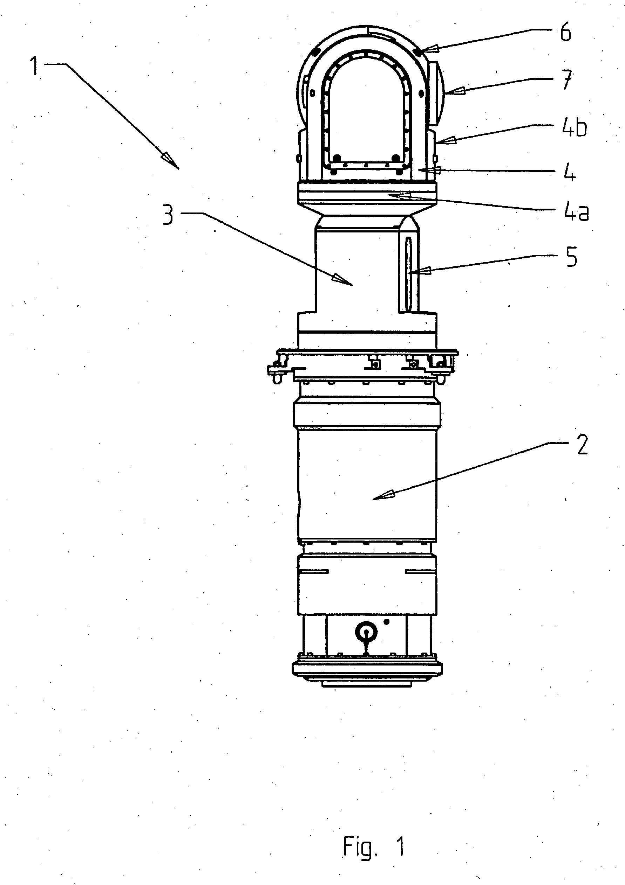

In Figur 1 dargestellt ist eine Detektionsvorrichtung 1 mit einem im Wesentlichen zylinderförmigen Gehäuse. Das Gehäuse besteht aus einem Basisteil 2 sowie zwei weiteren Gehäuseteilen 3 und 4. Die weiteren Gehäuseteile 3 und 4 sind unabhängig voneinander um die gleiche Achse gegenüber dem Basisteil 2 verdrehbar. In das erste weitere Gehäuseteil 3 ist ein Fenster 5 eingelassen, durch das Infrarotstrahlung in das erste weitere Gehäuseteil 3 dringt. Innerhalb des ersten weiteren Gehäuseteils 3 wird das Infrarotsignal mittels eines Spiegels umgelenkt und trifft auf einen im Basisteil 2 angeordneten Sensor. Das erste weitere Gehäuseteil 3 rotiert mit konstanter Winkelgeschwindigkeit, so dass die Detektion der Infrarotsignale zu einem periodisch aktualisierten Panorama in Form einer 360°-Rundumsicht führt.

Das auf dem ersten weiteren Gehäuseteil 3 angeordnete zweite weitere Gehäuseteil 4 besteht aus einem Trägerteil 4a und einem Kopfteil 4b. Das Kopfteil 4b ist gegenüber dem Trägerteil 4a drehbar angeordnet. Ein Bereich 6 des Kopfteils 4b ist gegenüber dem Trägerteil 4a schwenkbar. Hinter einem Fenster 7 im Bereich 6 ist ein Laserentfernungsmesser (LEM) angeordnet, der mittels eines Laserstrahls die Entfernung eines Objektes vom Sensor bestimmt. Durch Drehen des Kopfteils 4b und Schwenken des Bereichs 6 kann mit dem Laserentfernungsmesser jeder beliebige Punkt in der Hemisphäre oberhalb sowie gegebenenfalls zumindest teilweise unterhalb der Detektionsvorrichtung 1 vermessen werden. Verläuft beispielsweise das Trägerteil 4a parallel zum Erdboden, so kann durch Drehung des Kopfteils 4b die Azimut-Ausrichtung und durch Schwenken des Bereichs 6 die Elevation des Laserentfernungsmessers eingestellt werden.

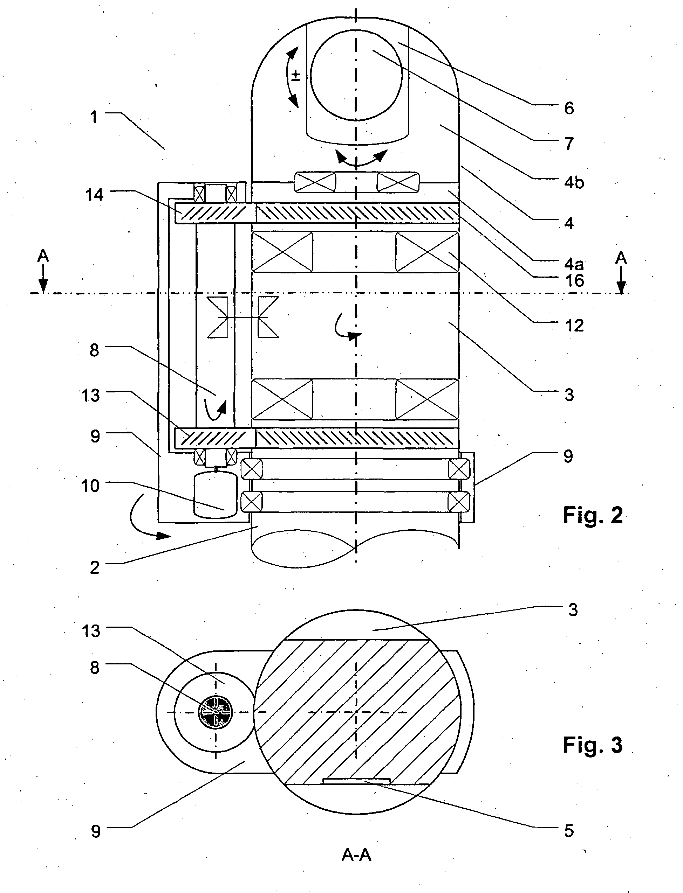

Figur 2 zeigt schematisch einen Längsschnitt durch die Detektionsvorrichtung 1. Das Basisteil 2 des Gehäuses ist über ein Wälzlager 11 mit dem ersten weiteren Gehäuseteil 3 verbunden. Das erste weitere Gehäuseteil 3 ist über ein Wälzlager 12 mit dem zweiten weiteren Gehäuseteil 4 verbunden. Das erste weitere Gehäuseteil 3 ist über das Wälzlager 15 um die Achse 17 gegenüber dem Basisteil 2 verdrehbar. Das Trägerteil 4a des zweiten weiteren Gehäuseteils 4 ist über das Wälzlager 12 um die Achse 17 gegenüber dem ersten weiteren Gehäuseteil 3 und somit gegenüber dem Basisteil 2 verdrehbar.

Eine Halteklammer 9 umgreift in einem oberen Bereich das Basisteil 2 und ist dort drehbar gelagert. In der Halteklammer 9 ist eine Synchronwelle 8 gelagert, deren Drehachse parallel zur Achse 17 verläuft. Am unteren Ende der Welle 8 ist ein Zahnkranz 13 angeordnet, der im Eingriff steht mit einer am Umfang des Basisteils 2 angeordneten Verzahnung 15. Am oberen Ende der Synchronwelle 8 ist ein Zahnkranz 14 angeordnet, der im Eingriff steht mit einer am Umfang des Trägerteils 4a des zweiten breiteren Gehäuseteils 4 angeordneten Verzahnung 16.

Wird die Synchronwelle 8 mittels des Schrittmotors 10 angetrieben, so bewirkt die formschlüssige Verbindung zwischen dem Zahnkranz 13 und der Verzahnung 15 eine Kreisbewegung der Synchronwelle 8 um das Gehäuse der Detektionsvorrichtung 1.

Das Übersetzungsverhältnis zwischen dem Zahnkranz 13 und der Verzahnung 15 entspricht dem Übersetzungsverhältnis zwischen dem Zahnkranz 14 und der Verzahnung 16. Dies hat zur Folge, dass eine Drehbwegung zwischen der Synchronwelle 8 und dem zweiten weiteren Gehäuseteil 4 stattfindet, die eine Verdrehung des Trägerteils 4a gegenüber dem Basisteil 2 um die Achse 17 verhindert. Über die Synchronwelle 8 und die Halteklammer 9 werden Momente, die beispielsweise beim Ausrichten des Kopfteils 4b gegenüber dem Trägerteil 4a auftreten, auf das Basisteil 2 übertragen, ohne eine Bewegung des ersten weiteren Gehäuseteils 3 zu beeinträchtigen. Dadurch wird eine mechanische Entkopplung zwischen dem ersten weiteren Gehäuseteil 3 und dem zweiten weiteren Gehäuseteil 4 erreicht, die eine präzise Ansteuerung und Ausrichtung der beiden weiteren Gehäuseteile unabhängig voneinander ermöglicht.

Über nicht dargestellte Schleifkontakte besteht eine elektrische und elektronische Verbindung zwischen dem Basisteil 2 und dem ersten weiteren Gehäuseteil 3 bzw. dem ersten weiteren Gehäuseteil 3 und dem zweiten weiteren Gehäuseteil 4. Über ein nicht dargestelltes Kabel besteht eine elektrische und elektronische Verbindung zwischen dem ersten weiteren Gehäuseteil 3 und der Halteklammer 9.

Figur 3 zeigt eine schematische Schnittdarstellung durch die Detektionsvorrichtung 1 entlang der Schnittlinie A-A aus Figur 2. Das erste weitere Gehäuseteil 3 dreht sich mit konstanter Winkelgeschwindigkeit gegen den Uhrzeigersinn, wie es durch den Pfeil angedeutet ist. Entsprechend ermöglicht das Fenster 5 im ersten weiteren Gehäuseteil 3 bei einem vollständigen Umlauf die Erzeugung einer 360°-Rundumsicht. Damit die Halteklammer 9 das Fenster 5 nicht verdeckt, umkreist sie durch die Drehung der Synchronwelle 8 das Gehäuse der Detektionsvorrichtung 1 ebenfalls gegen den Uhrzeigersinn mit einer Winkelgeschwindigkeit, die im Wesentlichen der Winkelgeschwindigkeit des ersten weiteren Gehäuseteils 3 entspricht. Dabei ist es ausreichend, wenn die Winkelgeschwindigkeit der Welle 8 und damit der Halteklammer 9 derart gesteuert wird, dass die Halteklammer 9 das Fenster 5 zu keinem Zeitpunkt verdeckt. Eine Relativbewegung zwischen der Halteklammer 9 und dem ersten weiteren Gehäuseteil 3 ist daher in gewissen Grenzen zulässig.

Die Drehbewegung der Halteklammer 9 und damit das Umkreisen des Gehäuses durch die Sychronwelle 8 wird dadurch erzeugt, dass der in Figur 3 nicht dargestellte Schrittmotor 10 die Synchronwelle 8 gegen den Uhrzeigersinn antreibt. Die Drehung der Synchronwelle 8 wird über den Zahnkranz 13 auf die in Figur 3 nicht dargestellte Verzahnung 15 am Umfang des Basisteils 2 übertragen.

Das vorstehende Ausführungsbeispiel ist rein exemplarisch und insofern nicht beschränkend. Insbesondere ist es möglich, andere als die genannten Sensoren zu verwenden, beispielsweise beliebige bildgebend oder nicht-bildgeberide Sensoren, und die Sensoren ganz oder teilweise auf das Basisteil und die weiteren Gehäuseteile zu verteilen. Auch die Ausführung des zweiten weiteren Gehäuseteils mit Trägerteil und Kopfteil ist optional. Die mechanische Verbindung zwischen der Synchronwelle und dem Basisteil bzw. dem zweiten weiteren Gehäuseteil kann anstatt durch die angegebene formschlüssige Verzahnung beispielsweise durch eine Reibverbindung oder einen Keilriemen ersetzt werden. Alternativ zu dem Schrittmotor kann die Synchronwelle auch durch jeden anderen, insbesondere steuerbaren Antrieb angetrieben werden. Weiterhin ist alternativ eine integrierte Bauweise möglich, bei der die Synchronwelle nicht das Gehäuse umkreist, sondern mit allen zugehörigen Komponenten innerhalb des Gehäuses angeordnet ist und dort kreist.

## Patentansprüche

1. Detektionsvorrichtung (1) mit einem Gehäuse bestehend aus einem Basisteil (2) sowie mindestens zwei unabhängig voneinander um die gleiche Achse gegen das Basisteil (2) verdrehbaren weiteren Gehäuseteilen (3, 4), wobei ein erstes weiteres Gehäuseteil (3) frei drehbar auf dem Basisteil (2) gelagert ist und ein zweites weiteres Gehäuseteil (4) frei drehbar an dem ersten weiteren Gehäuseteil (3) angeordnet ist, **gekennzeichnet durch** eine das Gehäuse umkreisende Synchronwelle (8), deren erstes Ende kraft- oder formschlüssig mit dem Unfang des Basistells (2) verbunden Ist und deren zweites Ende kraft- oder formschlüssig mit dem zweiten weiteren Gehäuseteil (4) verbunden ist derart, dass bei einer Drehung des ersten weiteren Gehäuseteils (3) die relative Drehlage des zweiten weiteren Gehäuseteils (4) zum Basisteil (2) erhalten bleibt.

2. Detektionsvorrichtung (1) nach Anspruch 1, **dadurch gekennzeichnet, dass** die Synchronwelle (8) in einer Halteklammer (9) gelagert ist.

3. Detektionsvorrichtung (1) nach einem der Ansprüche 1 oder 2, **gekennzeichnet durch** Schleifkontakte zwischen dem Basistell (2) und der Halteklammer (9).

4. Detektionsvorrichtung (1) nach einem der Ansprüche 1 bis 3, **gekennzeichnet durch** ein Kabel zwischen dem ersten weiteren Gehäuseteil (3) und der Halteklammer (9).

5. Detektionsvorrichtung (1) mit einem Gehäuse bestehend aus einem Basisteil (2) sowie mindestens zwei unabhängig voneinander um die gleiche Achse gegen das Basisteil (2) verdrehbaren weiteren Gehäuseteilen (3, 4), wobei ein erstes weiteres Gehäuseteil (3) frei drehbar auf dem Basisteil (2) gelagert ist und ein zweites weiteres Gehäuseteil (4) frei drehbar an dem ersten weiteren Gehäuseteil (3) angeordnet ist, **gekennzeichnet durch** eine in dem Gehäuse kreisende Synchronwelle (8), deren erstes Ende kraft- oder formschlüssig mit der Innenseite des Basisteils (2) verbunden ist und deren zweites Ende kraft- oder formschlüssig mit dem zweien weiteren Gehäuseteil (4) verbunden ist derart, dass bei einer Drehung des ersten weiteren Gehäusetelle (3) die relative Drehlage des zweiten weiteren Gehauseteils (4) zum Basisteil (2) erhalten bleibt.

6. Detektionsvorrichtung (1) nach einem der Ansprüche 1 bis 5, **dadurch gekennzeichnet, dass** die Synchronwelle (8) angetrieben ist, insbesondere durch einen Schrittmotor (10).

7. Detektionsvorrichtung (1) nach einem der Ansprüche 1 bis 6, **dadurch gekennzeichnet, dass** die Synchronwelle (8) im Wesentlichen synchron mit dem ersten weiteren Gehäuseteil (3) kreist.

8. Detektionsvorrichtung (1) nach einem der Ansprüche 1 bis 7, **dadurch gekennzeichnet, dass** die Drehachse der Synchronwelle (8) parallel zu der Drehachse (17) der weiteren Gehäuseteile (3, 4) verläuft.

9. Detektionsvorrichtung (1) nach einem der Ansprüche 1 bis 8, **gekennzeichnet durch** einen Sensor, insbesondere eine Empfangseinrichtung für Infrarotsignale, im ersten weiteren Gehäuseteil (3).

10. Detektionsvorrichtung (1) nach einem der Ansprüche 1 bis 9, **dadurch gekennzeichnet, dass** das erste weitere Gehäuseteil (3) eine räumlich begrenzte Öffnung (5) für die zu detektierenden Signale aufweist.

11. Detektionsvorrichtung (1) nach einem der Ansprüche 1 bis 10, **dadurch gekennzeichnet, dass** das zweite weitere Gehäuseteil (4) aus einem Trägerteil (4a) und einem gegenüber dem Trägerteil (4a) verdrehbaren und/oder zumindest teilweise schwenkbaren Kopfteil (4b) besteht, wobei die relative Drehlage des Trägerteils (4a) des zweiten weiteren Gehäuseteils (4) zum Basisteil (2) erhalten bleibt

12. Detektionsvorrichtung (1) nach einem der Ansprüche 1 bis 11, **dadurch gekennzeichnet, dass** das zweite weitere Gehäuseteil (4) eine Sensoreinheit trägt.

13. Detektionsvorrichtung (1) nach einem der Ansprüche 1 bis 12, **gekennzeichnet durch** eine Auswerteelektronik im Basisteil (2) des Gehäuses.

14. Detektionsvorrichtung (1) nach einem der Ansprüche 1 bis 13, **gekennzeichnet durch** Drehübertrager zwischen dem Basisteil (2) und dem ersten weiteren Gehäuseteil (3).

15. Detektionsvorrichtung (1) nach einem der Ansprüche 1 bis 14, **gekennzeichnet durch** Drehübertrager wischen dem ersten weiteren Gehäusetell (3) und dem zweiten weiteren Gehäuseteil (4).

16. Detektionsvorrichtung (1) nach einem der Ansprüche 1 bis 15, **gekennzeichnet durch** eine am Basistell (2) angeordnete Befestigungsvorrichtung.

## Claims

1. Detection device (1) having a casing comprising a base part (2) and at least two further casing parts (3, 4) that can be rotated independently of one another about the same axis with respect to the base part (2), a first further casing part (3) being freely rotatably mounted on the base part (2), and a second further casing part (4) being freely rotatably arranged on the first further casing part (3), **characterized by** a synchronizer shaft (8) which revolves around the casing, the first end of which is connected by a force or form fit to the circumference of the base part (2) and the second end of which is connected by a force or form fit to the second further casing part (4), in such a way that, during a rotation of the first further casing part (3), the relative rotational position of the second further casing part (4) with respect to the base part (2) is maintained.

2. Detection device (1) according to Claim 1, **characterized in that** the synchronizer shaft (8) is mounted in a holding clamp (9).

3. Detection device (1) according to either of Claims 1 and 2, **characterized by** wiping contacts between the base part (2) and the holding clamp (9).

4. Detection device (1) according to one of Claims 1 to 3, **characterized by** a cable between the first further casing part (3) and the holding clamp (9).

5. Detection device (1) having a casing comprising a base part (2) and at least two further casing parts (3, 4) that can be rotated independently of one another about the same axis with respect to the base part (2), a first further casing part (3) being freely rotatably mounted on the base part (2), and a second further casing part (4) being freely rotatably arranged on the first further casing part (3), **characterized by** a synchronizer shaft (8) which revolves in the casing, the first end of which is connected by a force or form fit to the inside of the base part (2) and the second end of which is connected by a force or form fit to the second further casing part (4), in such a way that, during a rotation of the first further casing part (3), the relative rotational position of the second further casing part (4) with respect to the base part (2) is maintained.

6. Detection device (1) according to one of Claims 1 to 5, **characterized in that** the synchronizer shaft (8) is driven, in particular by a stepper motor (10).

7. Detection device (1) according to one of Claims 1 to 6, **characterized in that** the synchronizer shaft (8) circulates substantially synchronously with the first further casing part (3).

8. Detection device (1) according to one of Claims 1 to 7, **characterized in that** the axis of rotation of the synchronizer shaft (8) extends parallel to the axis of rotation (17) of the further housing parts (3, 4).

9. Detection device (1) according to one of Claims 1 to 8, **characterized by** a sensor, in particular a receiving device for infrared signals, in the first further casing part (3).

10. Detection device (1) according to one Claims 1 to 9, **characterized in that** the first further casing part (3) has a physically limited opening (5) for the signals to be detected.

11. Detection device (1) according to one of Claims 1 to 10, **characterized in that** the second further casing part (4) comprises a carrier part (4a) and a top part (4b) that can be rotated and/or at least partly pivoted with respect to the carrier part (4a), the relative rotational position of the carrier part (4a) of the second further casing part (4) with respect to the base part (2) being maintained.

12. Detection device (1) according to one of Claims 1 to 11, **characterized in that** the second further casing part (4) carries a sensor unit.

13. Detection device (1) according to one of Claims 1 to 12, **characterized by** evaluation electronics in the base part (2) of the casing.

14. Detection device (1) according to one of Claims 1 to 13, **characterized by** rotary transformers between the base part (2) and the first further casing part (3).

15. Detection device (1) according to one of Claims 1 to 14, **characterized by** rotary transformers between the first further casing part (3) and the second further casing part (4).

16. Detection device (1) according to one of Claims 1 to 15, **characterized by** a fixing device arranged on the base part (2).

## Revendications

1. Dispositif de détection (1) doté d'un boîtier constitué d'une partie de base (2) ainsi que d'au moins deux parties de boîtier (3, 4) supplémentaires pouvant être tournées indépendamment les unes des autres autour du même axe par rapport à la partie de base (2), une première partie de boîtier (3) supplémentaire étant montée de manière à pouvoir tourner librement sur la partie de base (2) et une deuxième partie de boîtier (4) supplémentaire étant disposée de manière à pouvoir tourner librement sur la première partie de boîtier (3) supplémentaire, **caractérisé par** un arbre synchrone (8) tournant autour du boîtier, dont la première extrémité est reliée par engagement par force ou par complémentarité de forme à la périphérie de la partie de base (2) et dont la deuxième extrémité est reliée par engagement par force ou par complémentarité de forme à la deuxième partie de boîtier (4) supplémentaire, de telle sorte que, lors d'une rotation de la première partie de boîtier (3) supplémentaire, la position en rotation relative de la deuxième partie de boîtier (4) supplémentaire par rapport à la partie de base (2) soit maintenue.

2. Dispositif de détection (1) selon la revendication 1, **caractérisé en ce que** l'arbre synchrone (8) est monté dans un étrier de retenue (9).

3. Dispositif de détection (1) selon l'une quelconque des revendications 1 ou 2, **caractérisé par** des contacts à frottement entre la partie de base (2) et l'étrier de retenue (9).

4. Dispositif de détection (1) selon l'une quelconque des revendications 1 à 3, **caractérisé par** un câble entre la première partie de boîtier (3) supplémentaire et l'étrier de retenue (9).

5. Dispositif de détection (1) doté d'un boîtier constitué d'une partie de base (2) ainsi que d'au moins deux parties de boîtier (3, 4) supplémentaires pouvant être tournées indépendamment les unes des autres autour du même axe par rapport à la partie de base (2), une première partie de boîtier (3) supplémentaire étant montée de manière à pouvoir tourner librement sur la partie de base (2) et une deuxième partie de boîtier (4) supplémentaire étant disposée de manière à pouvoir tourner librement sur la première partie de boîtier (3) supplémentaire, **caractérisé par** un arbre synchrone (8) tournant dans le boîtier, dont la première extrémité est reliée par engagement par force ou par complémentarité de forme au côté intérieur de la partie de base (2) et dont la deuxième extrémité est reliée par engagement par force ou par complémentarité de forme à la deuxième partie de boîtier (4) supplémentaire, de telle sorte que, lors d'une rotation de la première partie de boîtier (3) supplémentaire, la position en rotation relative de la deuxième partie de boîtier (4) supplémentaire par rapport à la partie de base (2) soit maintenue.

6. Dispositif de détection (1) selon l'une quelconque des revendications 1 à 5, **caractérisé en ce que** l'arbre synchrone (8) est entraîné, en particulier par un moteur pas à pas (10).

7. Dispositif de détection (1) selon l'une quelconque des revendications 1 à 6, **caractérisé en ce que** l'arbre synchrone (8) tourne de manière essentiellement synchrone avec la première partie de boîtier (3) supplémentaire.

8. Dispositif de détection (1) selon l'une quelconque des revendications 1 à 7, **caractérisé en ce que** l'axe de rotation de l'arbre synchrone (8) s'étend parallèlement à l'axe de rotation (17) des parties de boîtier (3, 4) supplémentaires.

9. Dispositif de détection (1) selon l'une quelconque des revendications 1 à 8, **caractérisé par** un capteur, en particulier un dispositif de réception pour des signaux infrarouges, dans la première partie de boîtier (3) supplémentaire.

10. Dispositif de détection (1) selon l'une quelconque des revendications 1 à 9, **caractérisé en ce que** la première partie de boîtier (3) supplémentaire comprend une ouverture (5) limitée dans l'espace pour les signaux devant être détectés.

11. Dispositif de détection (1) selon l'une quelconque des revendications 1 à 10, **caractérisé en ce que** la deuxième partie de boîtier (4) supplémentaire est constituée d'une partie de support (4a) et d'une partie de tête (4b) pouvant être tournée et/ou au moins partiellement pivotée par rapport à la partie de support (4a), la position en rotation relative de la partie de support (4a) de la deuxième partie de boîtier (4) supplémentaire par rapport à la partie de base (2) étant maintenue.

12. Dispositif de détection (1) selon l'une quelconque des revendications 1 à 11, **caractérisé en ce que** la deuxième partie de boîtier (4) supplémentaire porte une unité de capteur.

13. Dispositif de détection (1) selon l'une quelconque des revendications 1 à 12, **caractérisé par** une unité d'évaluation électronique dans la partie de base (2) du boîtier.

14. Dispositif de détection (1) selon l'une quelconque des revendications 1 à 13, **caractérisé par** des transformateurs rotatifs entre la partie de base (2) et la première partie de boîtier (3) supplémentaire.

15. Dispositif de détection (1) selon l'une quelconque des revendications 1 à 14, **caractérisé par** des transformateurs rotatifs entre la première partie de boîtier (3) supplémentaire et la deuxième partie de boîtier (4) supplémentaire.

16. Dispositif de détection (1) selon l'une quelconque des revendications 1 à 15, **caractérisé par** un dispositif de fixation disposé sur la partie de base (2).
